# EUROPÄISCHE PATENTSCHRIFT

(11) **EP 0 419 943 B1**
(45) Veröffentlichungstag und Bekanntmachung des Hinweises auf die Patenterteilung: **23.02.1994**
(21) Anmeldenummer: 90117559.6
(22) Anmeldetag: 12.09.1990
(51) Int. Cl.: H02H 3/08, H02H 3/04

(54) **Leistungs-Steuereinheit**
Power control unit
Unité de commande de puissance

(30) Priorität: 25.09.1989 DE 3931921
(43) Veröffentlichungstag der Anmeldung: 03.04.1991
(73) Patentinhaber: Bodenseewerk Gerätetechnik GmbH, 88662 Überlingen (DE)
(72) Erfinder: Marschall, Klaus Wolfgang, W-7758 Meersburg (DE)
(74) Vertreter: Wolgast, Rudolf, Dipl.-Chem. Dr.

(56) Entgegenhaltungen:
- WO-A-87/07388
- DE-A- 3 733 088
- US-A- 4 611 154
- US-A- 4 631 474
- DER ELEKTRONIKER Nr. 4, April 1989, MUNCHEN Seiten 33 - 38; LUC WUIDART: 'Intelligente Leistungshalbleiter-Funktion und Anwendung'

## Beschreibung

### Technisches Gebiet

Die Erfindung betrifft eine Leistungs-Steuereinheit zum überwachbaren Ansteuern, Überwachen und Absichern von stromverbrauchenden Lasten in einem Lastkreis durch einen Mikroprozessor mit leistungsarmen Steuerausgängen.

Die Lasten können beispielsweise Solenoid-Schaltspulen, Schrittmotorspulen, Relais oder Lampen sein. Diese werden aus einer Fremdspannung gespeist. Sie werden von einem Mikroprozessor angesteuert.

### Zugrundeliegender Stand der Technik

Es sind leistungstreibende Bausteine auf dem Markt. Diese bekannten Bausteine sind meist für einen bestimmten Anwendungszweck in einer bestimmten Umgebung konzipiert. Sie sind daher nicht flexibel einsetzbar. Bei den bekannten Bausteinen fehlen weiterhin entweder Überwachungsmöglichkeiten oder eine Absicherung der Last. Bei allen bekannten Bausteinen fehlt die Möglichkeit, die Bausteine selbst durch einen Mikroprozessor zu prüfen.

Bei den bekannten Bausteinen befindet sich der stromschaltende Transistor in dem Baustein. Auch das führt zu einer Beschränkung der Anwendbarkeit. Für eine bestimmte Anwendung ist dann im allgemeinen entweder die Treiberleistung zu gering ausgelegt oder die Treiberleistung ist zu hoch. Im letzteren Falle ist dann meist das Gehäuse zu groß für den Anwendungszweck. Durch den Einbau des stromschaltenden Transistors und der Treiberleistung ist oft der zulässige Bereich der Arbeitstemperaturen zu gering.

Durch die DE-A-36 16 975 ist ein Verfahren zur Überprüfung einer Mehrzahl von Lastwiderstandskreisen auf Funktionsfähigkeit bekannt. Die Lastwiderstandskreise werden von einer gemeinsamen Endstufe angesteuert. Sowohl bei Ansteuerung als auch bei Nichtansteuerung der Endstufe werden in allen Lastwiderstandskreisen Kennwerte gemessen und mit vorgegebenen Referenzwerten verglichen. Wenn Abweichungen festgestellt werden, wird eine Anzeigeeinrichtung aktiviert. Gegebenenfalls wird die Endstufe von einem als funktionsunfähig erkannten Lastwiderstandskreis abgetrennt. Über die technische Ausführung dieser Schaltung ist in der Druckschrift nichts offenbart.

In einem Aufsatz "Strom und Spannung wie gewünscht, Mikroprozessor regelt netzgeführten Stromrichter" in "elektronikpraxis" (1984), 150-154 ist eine mit einem Mikroprozessor arbeitende Leistungsregelung bekannt. Strom und Spannung werden an der Last durch Sensoren gemessen, digitalisiert und auf den Mikroprozessor aufgeschaltet. Der Mikroprozessor erhält auch Sollwerte von Sollwertgebern. Der Mikroprozessor steuert einen Zündimpulserzeuger mit einem Zeitgeber, der Zündimpulse auf Thyristoren zur Erzeugung eines Zündmusters aufschaltet.

In einem Aufsatz ""Intelligente" Leistungshalbleiter - Funktion und Anwendung" in "der elektroniker" (1989), 33-38 sind integrierte Bausteine beschrieben, die in Verbindung mit einem Mikroprozessor eine Leistung steuern. Bei diesen Leistungshalbleitern wird ein in den Baustein integrierter MOSFET-Leistungstransistor über einen Ansteuerpfad von einem Mikroprozessor angesteuert. Über einen Eingang wird Unterspannung erfaßt. Weiterhin erfaßt der Leistungshalbleiter Überlastung und eine Lastunterbrechung. Ein Temperaturfühler überwacht die Temperatur des Leistungshalbleiters. Die Überlastungs-, Unterspannungs- und Lastunterbrechungssignale sind auf eine Logikschaltung geschaltet. Die Logikschaltung liefert an einem Ausgang ein Statussignal.

Durch einen Aufsatz "Voltage level sensor" in "Electronic Engineering" (1973), 16 ist eine Schaltung mit einem Verstärker und einem Komparator bekannt, der die verstärkte Eingangsspannung mit einer einstellbaren Referenzspannung vergleicht. Der Komparator steuert einen Leistungstransistor, der seinerseits ein Relais steuert.

Es sind verschiedene elektronische Leistungstrennschalter bekannt, also Halbleiterschaltungen, die mit einem Mikroprozessor arbeiten und bei Überschreiten eines Grenzwertes des Stromes den Laststromkreis unterbrechen. Beispiele dafür sind die EP-B-0 133 969, die DE-A-36 23 755, die DE-A-37 10 880, die DE-A-38 41 491, die DE-A-36 38 933 und die DE-C-28 18 067. Die DE-A-30 08 478 zeigt eine Steueranordnung für elektrische Generator- und Verteilersysteme. Die DE-A-38 07 305 zeigt einen binären Strom- und Spannungsbeobachter für selbstgeführte Stromrichteranlagen.

### Offenbarung der Erfindung

Der Erfindung liegt die Aufgabe zugrunde, das Ansteuern, Überwachen und Absichern von stromverbrauchenden Lasten zu vereinfachen.

Weiterhin soll die Leistungs-Steuereinheit selbst leicht zu testen sein. Die Leistungs-Steuereinheit soll flexibel und für stark unterschiedliche Lasten anwendbar sein. Der zulässige Temperaturbereich soll gegenüber dem Stand der Technik erweitert werden.

Erfindungsgemäß wird diese Aufgabe dadurch gelöst, daß in einem integrierten Baustein folgende Schaltungselemente integriert sind:
(a) ein von einem elektronischen Schalter unterbrechbarer Ansteuerpfad, der von einem C-MOS/TTL-Signal von einem Mikroprozessor-Ausgangsanschluß beaufschlagbar ist und ein MOS-FET-Steuersignal erzeugt,
(b) ein Zustandsspeicher, durch welchen der besagte elektronische Schalter steuerbar ist und der seinerseits durch ein externes C-MOS/TTL-Signal ansteuerbar ist, derart, daß der Schalter auf ein erstes Signal öffnet und auf ein zweites Signal schließt,
(c) ein Stromkomparator mit einer ersten und einer zweiten durch äußere Beschaltung bestimmbaren und einer dritten festen internen Schaltschwelle, auf welchen potentialfrei der Betriebsstom im Lastkreis aufschaltbar ist und durch welchen der Zustandsspeicher im Sinne des Öffnens des elekronischen Schalters ansteuerbar ist
   - mit einer durch externe Beschaltung bestimmbaren Verzögerung, wenn eine zweite, niedrigere Schaltschwelle des Stromkomparators überschritten wird, und
   - unverzögert, wenn die dritte, höhere Schaltschwelle des Stromkomparators überschritten wird,
(d) eine Zustandsanzeige für den Zustandsspeicher zur Anzeige eines Zustands "Überstrom",
(e) ein Lastspannungs-Meßpfad mit einem Signalausgang, durch den eine im zulässigen Bereich liegende Lastspannung signalisierbar ist,
(f) ein erster Laststrom-Meßpfad, dessen Laststrom-Eingang mit dem Stromkomparator verbunden ist, mit einem Signalausgang, durch den ein im zulässigen Bereich liegender Laststrom signalisierbar ist,
(g) ein zweiter Laststrom-Meßpfad mit einem gemäß dem Stom kalibrierbaren Analog- Spannungsausgang, der auf einen A/D-Wandler eines Mikroprozessors aufschaltbar ist,
(h) eine Rücksetzschaltung, die beim Einschalten des Bausteins den Zustandsspeicher definiert setzt, und
(i) eine Testschaltung, durch welche analoge Eingangsspannungen von einem D/A-Wandler des Mikroprozessors auf die Strommeßpfade zur Simulation von Lastströmen aufschaltbar sind.

Ein Ausführungsbeispiel der Erfindung ist nachstehend unter Bezugnahme auf die zugehörigen Zeichnungen näher erläutert.
- Fig.1: ist ein Blockschaltbild einer als Baustein ausgebildeten Leistungs-Steuereinheit.
- Fig.2: zeigt die Anordnung der Anschlußstifte bei dem Baustein gemäß Fig. 1.
- Fig.3: zeigt die logische Verknüpfung von Eingängen und Ausgängen bei einer Leistungs-Steuereinheit nach Fig.1.
- Fig.4: zeigt die Schaltung einer Leistungs-Steuereinheit nach Fig.1 in Verbindung mit einem Mikroprozessor und einer Last bei "Lowdriver"-Anwendung.
- Fig.5: zeigt die Schaltung einer Leistungs-Steuereinheit nach Fig.1 in Verbindung mit einem Mikroprozessor und einer Last bei "Highdriver"-Anwendung.

### Bevorzugte Ausführung der Erfindung

Mit 10 ist eine als Baustein aufgebaute Leistungs-Steuereinheit bezeichnet. Die dick gezeichnete Umrandung kennzeichnet den Baustein. Die auf der Umrandung sitzenden Kreise symbolisieren die Anschlüsse des Bausteins.

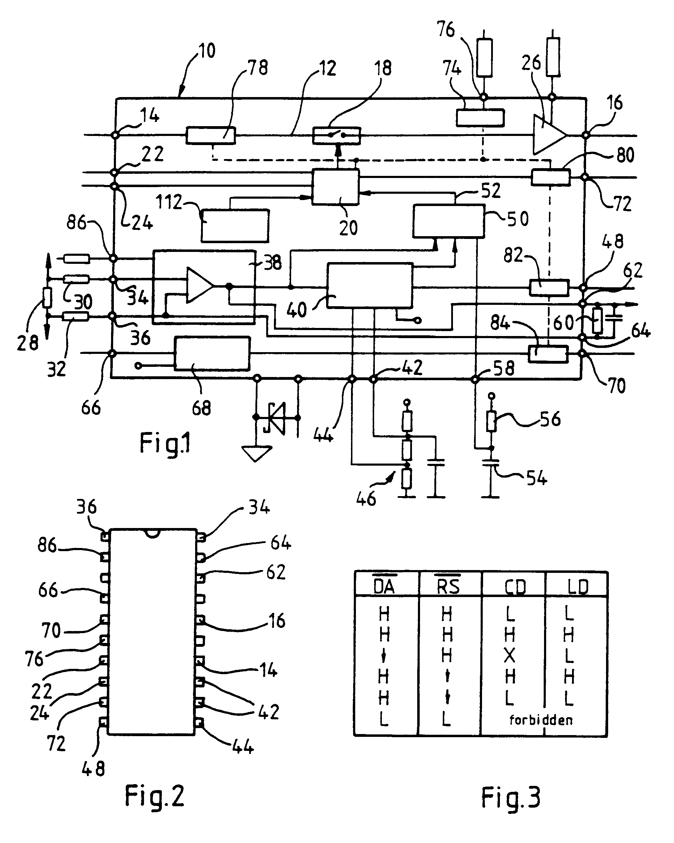

Ein Ansteuerpfad 12 verläuft von einem Anschluß 14 des Bausteins 10 zu einem Anschluß 16. Der Ansteuerpfad 12 enthält einen elektronischen Schalter 18, der in Fig.1 als Schaltkontakt dargestellt ist. Der Schalter 18 ist von einem Zustandsspeicher 20 gesteuert. Der Zustandsspeicher 20 steuert in einem ersten Speicherzustand den Schalter 18 auf, also nichtleitend. In einem zweiten Speicherzustand steuert der Zustandsspeicher 20 den Schalter 18 zu, also leitend.

Der Zustandsspeicher 20 kann durch ein externes Signal DA (disable) an einem Eingang 22 des Bausteins 10 in den ersten Speicherzustand gebracht werden. Durch ein externes Signal RS (reset) an einem Eingang 24 des Bausteins 10 kann der Zustandsspeicher 20 in den zweiten Zustand zurückgesetzt werden, in welchem der Schalter 18 geschlossen ist.

Der Ansteuerpfad 12 enthält weiterhin einen Verstärker 26, der am Ausgang 16 ein Signal zur Ansteuerung eines MOS-FET erzeugt.

Eine dem Laststrom in einem Lastkreis proportionale Spannung fällt an einem Meßwiderstand 28 ab. Die an dem Meßwiderstand 28 abfallende Spannung liegt über den Widerständen 30 und 32 zwischen den Eingängen 34 und 36 des Bausteins 10 an. Die Eingänge 34 und 36 sind mit den Eingängen eines Strom-Differenzverstärkers 38 verbunden. Dadurch wird ein potentialfreier Strom für einen Stromkomparator 40 erzeugt. Der Stromkomparator 40 erhält einen ersten Schwellwert S2 von einem Eingang 44 des Bausteins 10, einen zweiten Schwellwert S1 von einem Eingang 42 und einen dritten Schwellwert von einer internen Referenz (10 Volt). Die Schwellwerte S1 und S2 werden extern durch einen Spannungsteiler 46 erzeugt.

Wenn der Strom am Ausgang des Strom-Differenzverstärkers 38 unterhalb des ersten Schwellwertes S2 liegt, läßt der Stromkomparator 40 den Zustand des Zustandsspeichers 20 unverändert, der Ausgang 48 meldet hingegen "Unterstrom" (z.B. Drahtbruch).

Wenn der Strom des Strom-Differenzverstärkers 38 zwischen der ersten und der zweiten Schwelle liegt, läßt der Stromkomparator 40 den Zustand des Zustandsspeichers 20 gleichfalls unverändert, der Ausgang 48 meldet Strom in Toleranz.

Wenn der Strom des Strom-Differenzverstärkers 38 zwischen der zweiten Schwelle S1 und der dritten Schwelle (10 V) liegt, spricht ein Überstromkomparator 50 an. Der Stromkomparator 40 und der Überstromkomparator 50 setzen über eine Leitung S2 den Zustandsspeicher 20, der das Öffnen des Schalters 18 mit einer Verzögerung bewirkt. Die Verzögerung wird durch ein externes RC-Glied mit dem Kondensator 54 und einem Widerstand 56 bestimmt, die an einer Versorgungsspannung anliegen. Die am Kondensator 54 anliegende Spannung ist über einen Eingang 58 des Bausteins 10 auf den Überstromkomparator 50 geschaltet.

Wenn der Strom des Strom-Differenzverstärkers sich oberhalb der dritten Schwelle (10 Volt) befindet, erfolgt das Setzen des Zustandsspeichers 20 und das Öffnen des Schalters 18 unverzögert (z.B. Kurzschluß).

Eine dem Strom proportionale, analoge Spannung fällt an einem externen Widerstand 60 ab. Dieser Widerstand liegt an den Ausgängen 62 und 64 des Bausteins 10. Die Ausgänge 62 und 64 sind mit dem Strom-Differenzverstärker 38 verbunden.

An einem Eingang 66 des Bausteins 10 liegt die an der Last anliegende Spannung. Durch einen Spannungskomparator 68 wird diese Spannung mit einer Referenzspannung verglichen. Wenn die Spannung am Eingang 66 geringer ist als die Referenzspannung, erscheint ein Ausgangssignal an einem Ausgang 70. Dieses Ausgangssignal gibt an, daß die Spannung an der Last in einem zulässigen Bereich liegt.

An einem Ausgang 72 des Bausteins 10 wird der Zustand des Zustandsspeichers 20 angezeigt.

Die Ausgangssignale sind übliche TTL-Spannungen. Durch eine TTL-Referenz 74, die über einen Eingang 76 an der Versorgungsspannung von +5 Volt liegt, werden die Ausgangsspannungen mittels Pufferschaltungen 78,80,82 und 84 auf der TTL-Spannung gehalten.

An einen Eingang 86 kann eine Spannung für Testzwecke angelegt werden. Damit kann durch Simulation der Lastströme durch den Mikroprozessor eine Überprüfung der Funktion des Bausteins 10 selbst erfolgen.

Der Baustein mit seinen Anschlußstiften ist in Fig.2 in Draufsicht dargestellt.

Fig.3 ist eine Wahrheitstabelle und zeigt den Zusammenhang zwischen den Eingangssignalen an den Eingängen 22 und 24, welche den Zustandsspeicher 20 ansteuern, und den Zusammenhang zwischen dem Eingangssignal am Eingang 14 und dem Ausgangssignal am Ausgang 16.

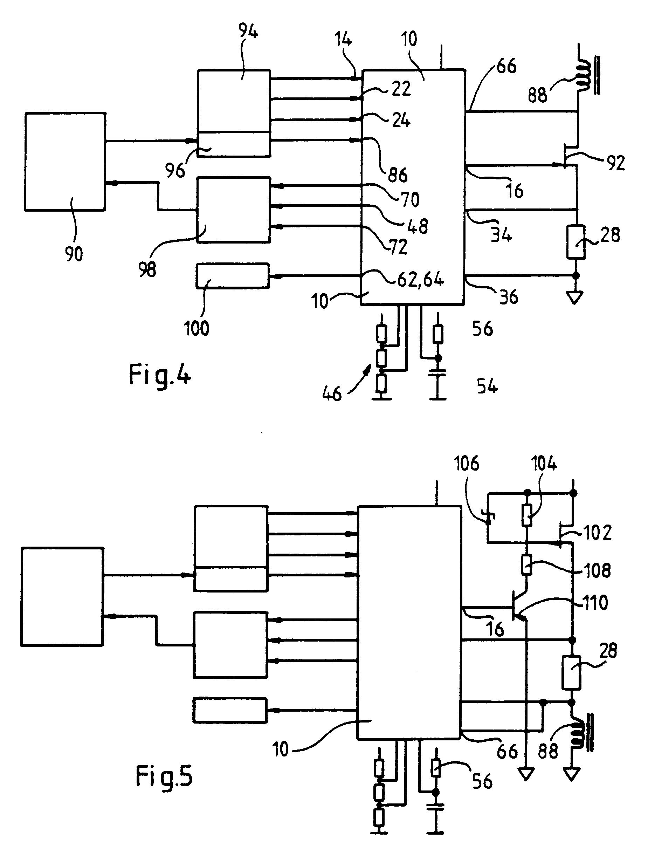

Fig.4 zeigt die Schaltung des Bausteins 10 in Verbindung mit einer Last 88 und einem Mikroprozessor 90, wobei der Baustein als "Lowdriver" geschaltet ist, also die "kalte" Seite der Last 88 schaltet.

In Reihe mit der Last 88 liegt ein MOS-FET 92 und der Meßwiderstand 28, wobei die Last mit einer Versorgungsspannung von 28 Volt verbunden und das Ende des Meßwiderstandes 28 geerdet ist. Das Gate des MOS-FET 92 ist mit dem Ausgang 16 des Ansteuerpfades 12 verbunden.

Der Mikroprozessor 90 weist einen Block 'Ausgangsport' 94 auf, über welchen er z. B. Ansteuersignale auf Eingang 14, ein "Disable"-Signal auf Eingang 22 und ein "Rücksetz"-Signal auf Eingang 24 des Bausteins 10 geben kann. Über einen D/A-Wandler 96 liefert der Mikroprozessor 90 Ströme für Testzwecke auf Eingang 86. Der Mikroprozessor weist weiter einen Eingangsport 98 auf. Über den Eingangsport 98 erhält der Mikroprozessor 90 Information über Spannung, Strom und Überstrom von den Ausgängen 70,48 und 72 des Bausteins 10. Ein im Strom-Differenzverstärker 38 fließender Strom, der einen Spannungsabfall an dem Widerstand 60 erzeugt, wird durch einen A/D-Wandler 100 in ein digitales Wort umgesetzt, das ebenfalls dem Mikroprozessor 90 zugeführt wird.

In Fig.5 ist die Verbindung zum Mikroprozessor die gleiche wie bei Fig.4 und daher nicht noch einmal beschrieben.

Der Baustein 10 ist hier als "Highdriver" geschaltet. Durch den Baustein 10 wird die "heiße" Seite der Last geschaltet. An der Versorgungsspannung von 28 Volt liegen im Lastkreis nacheinander ein MOS-FET 102, der Meßwiderstand 28 und die Last 88. Die Last ist an einem Ende mit Erde verbunden. An der Versorgungsspannung liegen weiterhin in Reihe gegen Erde ein Widerstand 104 mit einem dazu parallelgeschalteten Spannungsbegrenzer 106, ein Widerstand 108 und die Kollektor-Emitter-Strecke eines Transistors 110. Die Basis des Transistors ist wieder mit dem Ausgang 16 des Bausteins 10 verbunden.

Die beschriebene Leistungs-Steuereinheit arbeitet wie folgt:

Zur Ansteuerung einer Last 88 gibt der Mikroprozessor über seinen Ausgangsport 94 ein Ansteuersignal auf den Baustein 10, also ein Kommando, die Last 88 einzuschalten. Das geschieht über einen externen Treiber-Transistor in Form eines MOS-FETs 92 bzw. 102. Der MOS-FET 92 oder 102 schaltet den Strom in dem Laststromkreis, der von einer gesonderten Spannungsquelle mit 28 Volt gespeist wird. Die Ansteuerung der Last 88 kann, wie in Fig.4 gezeigt ist, durch einen als "Lowdriver" geschalteten Baustein 10 geschehen oder, wie in Fig.5 gezeigt ist, durch einen Baustein 10, der als "Highdriver" geschaltet ist. Im letzteren Falle wird der MOS-FET 102 über eine Stufe mit dem Transistor 110 angesteuert, wobei der Ausgang 16 auf die Basis des Transistors 110 geschaltet ist.

Der Baustein kann dazu dienen, die Last 88 zu überwachen. Im Lastkreis liegt der Meßwiderstand 28. Der Widerstandswert des Meßwiderstandes 28 liegt in der Größenordnung von 100 Milliohm. Die an dem Meßwiderstand 28 abgegriffene Spannung ist ein Maß für den Laststrom. Diese Spannung wird über die Eingänge 34 und 36 dem Strom-Differenzverstärker 38 zugeführt. Die Strommessung wird über die Ausgänge 62 und 64 mit dem Widerstand 60 dem A/D-Wandler 100 des Mikroprozessors zugeführt. Dadurch kann der Mikroprozessor 90 unabhängig von den durch die Schwellwerte S₁ und S₂ erhaltenen Informationen den tatsächlichen, augenblicklichen Laststrom erkennen.

Durch den Spannungsteiler 46 werden die zwei Schwellwerte S₁ und S₂ festgelegt. Unterhalb der unteren Schwelle S₂ ist der Ausgang 48 aktiviert und zeigt an, daß der Laststrom unter dem zulässigen Bereich liegt. Zwischen den beiden Schwellen S₁ und S₂ zeigt der Ausgang 48 an, daß der Laststrom in Toleranz ist. Oberhalb der Schwelle S₁ signalisiert der Ausgang 48 Überstrom nachdem nach Ablauf einer Verzögerungszeit der Zustandsspeicher 20 den Kommandopfad mit dem Schalter 18 unterbrochen hat. Durch die Unterbrechung wird die Ansteuerung des MOS-FET 92 oder 102 zurückgenommen. Der MOS-FET 92 oder 102 wird nichtleitend, und der Strom durch die Last 88 wird unterbrochen. Oberhalb der dritten Schwelle (10 Volt) erfolgt diese Unterbrechung ohne Verzögerung.

Mit 112 ist eine Rücksetzschaltung bezeichnet, die beim Einschalten des Bausteins 10 den Zustandsspeicher 20 definiert setzt, so daß z.B. der Schalter 18 in der Offenstellung ist.

Bei Überstrom oder Kurzschluß (Überschreiten der zweiten oder dritten Schwelle des Laststromes) wird über den Zustandsspeicher 20, Schalter 18 und MOS-FET 92 bzw. 102 der Laststrom in der beschriebenen Weise abgeschaltet. Der gleiche Effekt wird erzielt durch ein "Disablel"-Signal an dem Eingang 22. Dieses Disable-Signal kann entweder von dem Mikroprozessor 90 über einen (nicht dargestellten) zweiten Ausgangsport, von einem anderen Mikroprozessor, von einer den Mikroprozessor überwachenden Überwachungsvorrichtung ("Watch-Dog") oder einer sonstigen Uberwachungsschaltung, etwa einer Überdrehzahlerkennung, geliefert werden. Nach Auslösung des Zustandsspeichers 20 kann dieser durch ein Rückstellsignal an dem Eingang 24 wieder in seinen Ausgangszustand zurückgesetzt werden, in welchem er den Schalter 18 schließt.

Zur Überprüfung der Leistungs-Steuereinheit können die Schaltungsteile für die Ansteuerung, über den Eingang 14, die Schaltungsteile für die Überwachung und Absicherung der Last über den Eingang 86 aktiviert werden.

Der Mikroprozessor 90 gibt dann eine Spannung über den D/A-Wandler 96 an den Baustein 10, die über einen Widerstand einen Strom in dem Eingang 86 erzeugt. Der Strom wird durch den Strom-Differenzverstärker zu dem im Lastkreis gemessenen Strom addiert. Damit können die verschiedenen Überstromauslösungen, Überstromanzeigen und sonstige bei Überstrom auftretenden Schaltvorgänge ausgelöst werden.

Eine Überwachung des Bausteins 10 auf Übertemperatur ist hier nicht erforderlich, da der Laststrom nicht über den Baustein 10 fließt.

Es wird durch den beschriebenen Aufbau ein universell verwendbarer Baustein geschaffen. Dadurch, daß die Parameter wie Schaltschwellen, Verzögerungszeit und Eichung der Strommessung durch Beschalten mit externen Widerständen erfolgt und auch der MOS-FET keinen integralen Teil des Bausteins bildet, kann der Baustein unter den verschiedfensten Bedingungen angewandt werden. Andererseits faßt er aufwendige Teilschaltungen zu einem kleinen, kostengünstigen und zuverlässigen Baustein zusammen.

Der Baustein 10 wurde als ASIC in 3µ-Bipolartechnik realisiert.

## Patentansprüche

1. Leistungs-Steuereinheit (10) zum überwachbaren Ansteuern, Überwachen und Absichern von stromverbrauchenden Lasten in einem Lastkreis durch einen Mikroprozessor (90) mit leistungsarmen Steuerausgängen, **dadurch** **gekennzeichnet, daß** in einem integrierten Baustein folgende Schaltungselemente integriert sind:
(a) ein von einem elektronischen Schalter (18) unterbrechbarer Ansteuerpfad (12), der von einem C-MOS/TTL- Signal von einem Mikroprozessor-Ausgangsanschluß beaufschlagbar ist und ein MOS-FET-Steuersignal erzeugt,
(b) ein Zustandsspeicher (20), durch welchen der besagte elektronische Schalter (18) steuerbar ist und der seinerseits durch externe C-MOS/TTL-Signale ansteuerbar ist, derart, daß der Schalter (18) auf ein erstes Signal öffnet und auf ein zweites Signal schließt,
(c) ein Stromkomparator (40) mit einer ersten und einer zweiten durch äußere Beschaltung bestimmbaren und einer dritten festen, internen Schaltschwelle, auf welchen potentialfrei der Betriebsstom im Lastkreis aufschaltbar ist und durch welchen der Zustandsspeicher (20) im Sinne des Öffnens des elekronischen Schalters (18) ansteuerbar ist
- mit einer durch externe Beschaltung (54,56) bestimmbaren Verzögerung, wenn eine zweite niedrigere Schaltschwelle des Stromkomparators (40) überschritten wird, und
- unverzögert, wenn die dritte höhere Schaltschwelle des Stromkomparators (40) überschritten wird,
(d) eine Zustandsanzeige (72) für den Zustandsspeicher (20) zur Anzeige eines Zustands "Überstrom",
(e) ein Lastspannungs-Meßpfad (68) mit einem Signalausgang (70), durch den eine im zulässigen Bereich liegende Lastspannung signalisierbar ist,
(f) ein erster Laststrom-Meßpfad, dessen Laststrom-Eingang (34,36) mit dem Stromkomparator (40) verbunden ist, mit einem Signalausgang (48), durch den ein im zulässigen Bereich liegender Laststrom signalisierbar ist,
(g) ein zweiter Laststrom-Meßpfad (60) mit einem gemäß dem Strom kalibrierbaren Analog-Spannungsausgang (62,64), der auf einen A/D-Wandler (100) eines Mikroprozessors (90) aufschaltbar ist,
(h) eine Rücksetzschaltung (112), die beim Einschalten des Bausteins (10) den Zustandsspeicher (20) definiert setzt, und
(i) eine Testschaltung (86,96), durch welche analoge Eingangsspannungen von einem D/A-Wandler des Mikroprozessors (90) auf die Strommeßpfade (40) zur Simulation von Lastströmen aufschaltbar sind.

## Claims

1. Power control unit for monitorably energizing, monitoring and protecting current-consuming loads in a load circuit by a microprocessor having low-power control outputs, **characterized in that** the following circuit elements are integrated in an integrated device:
(a) an energizing path (12) arranged to permit interruption by an electronic switch (18) and to permit application of a C-MOS/TTL-signal from a microprocessor output port and to generate generates a MOS-FET control signal,
(b) a status memory (20), which is adapted to control said electronic switch (18) and which, in turn, is arranged to be energized by external C-MOS/TTL-signals such that the switch (18) opens at a first signal and closes at a second signal,
(c) a current comparator (40) having a first and a second switching threshold determined by external wiring and a third switching threshold and to which the operating current in the load circuit is applied potential-freely and which is adapted to energize the status memory (20) in order to open the electronic switch (18)
- with a delay determinable by external wiring (54, 65), when the second lower switching threshold of the current comparator (40) is exceeded, and
- undelayed, when the third higher switching threshold of the current comparator (40) is exceeded,
(d) a status indicator (72) for the status memory (20) for indicating a status of "excess current",
(e) a load voltage measuring path (68) having a signal output (70), which is adapted to indicate a load voltage located within the allowed range,
(f) a first load current measuring path, the load current input (34, 36) of which is connected to the current comparator (40), having a signal output (48) which is adapted to indicate a load current located in the allowed range,
(g) a second load current measuring path (60) having an analog voltage output (62, 64), which can be calibrated according to the current and applied to an analog-to-digital converter (100) of a microprocessor (90),
(h) a reset circuit (112), which in a defined manner sets the status memory (20), when the device (10) is switched on, and
(i) a test circuit (86, 96), which is adapted to apply analog input voltages from a digital-to analog converter of the microprocessor (90) to the current measuring paths (40) for simulation of load currents.

## Revendications

1. Unité de commande de puissance destinée à la commande, au contrôle et à l'assurage contrôlables de charges à consommation de courant dans un circuit de charge par un microprocesseur muni de sorties de commande à faible puissance, **caractérisée par le fait** **que** dans un composant intégré les éléments de circuit suivants sont integrés:
(a) une voie de commande (12) susceptible d'être interrompue par un interrupteur électronique (18) et soumise à un signal C-MOS/TTL d'un raccord de sortie du microprocesseur et engendrant un signal de commande MOS-FET,
(b) une mémoire d'état (20) susceptible de commander ledit interrupteur électronique (18) et d'être commander, de sa part, par des signaux C-MOS/TTL externes de sorte que l'interrupteur (18) ouvre avec un premier signal et ferme avec un second signal,
(c) un comparateur de courant (40) muni d'un permier et d'un second seuil de commutation déterminable par filage externe et d'un troisième seuil de commutation interne fixe, comparateur de courant auquel le courant d'opération dans le circuit de charge peut être appliqué sans potentiel et par lequel la mémoire d'état (20) est susceptible d'être commandée de sorte à ouvrir l'interrupteur électronique (18),
- avec un retardement déterminable par un filage externe (54, 56) lorsqu'un second seuil de commutation plus bas du comparateur de courant (40) est dépassé, et
- sans retardement lorsque le troisième seuil de commutation plus élevé du comparateur de courant (40) est dépassé,
(d) un indicateur d'état (72) pour la mémoire d'état (20) destiné à l'indication d'un état "surcourant",
(e) une voie de mesure de tension de charge (68) munie d'une sortie de signal (70) susceptible de signaler une tension de charge située dans la marge admissible,
(f) une voie de mesure de courant de charge dont l'entrée de courant de charge (34,36) est reliée au comparateur de courant (40), et munie d'une sortie de signal (48) susceptible de signaler un courant de charge situé dans la marge admissible,
(g) une seconde voie de mesure de courant de charge (60) munie d'une sortie de tension analogique (62,64) susceptible d'être calibrée selon le courant et d'être appliquée à un convertisseur A/D (100) d'un microprocesseur,
(h) un circuit de remise (86,96) qui, lorsque le composant (10) est mis en circuit, met la mémoire d'état (20) de manière définie, et
(i) un circuit d'épreuve (86,96) par lequel des tensions d'entrée analogiques peuvent être appliquées par un convertisseur D/A du microprocesseur (90) aux voies de mesure de courant (40) afin de simuler des courants de charge.
